(19) Europäisches Patentamt
European Patent Office
Office européen des brevets

(11) **EP 1 810 365 B1**

(12) **FASCICULE DE BREVET EUROPEEN**

(45) Date de publication et mention
de la délivrance du brevet:
**23.07.2008 Bulletin 2008/30**

(51) Int Cl.:
*H01Q 1/22* *(2006.01)* *H01Q 1/50* *(2006.01)*
*H01Q 9/24* *(2006.01)*

(21) Numéro de dépôt: **05809147.1**

(22) Date de dépôt: **11.10.2005**

(86) Numéro de dépôt international:
**PCT/FR2005/002514**

(87) Numéro de publication internationale:
**WO 2006/040472 (20.04.2006 Gazette 2006/16)**

(54) **ETIQUETTE SANS CONTACT A ANTENNE EN Y OMNIDIRECTIONNELLE**

NICHT-KONTAKT-LABEL MIT Y-FÖRMIGER OMNIDIREKTIONALER ANTENNE

NON-CONTACT LABEL WITH Y-SHAPED OMNIDIRECTIONAL ANTENNA

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **12.10.2004 FR 0410757**

(43) Date de publication de la demande:
**25.07.2007 Bulletin 2007/30**

(73) Titulaire: **ASK S.A.**
**06906 Sophia Cedex (FR)**

(72) Inventeur: **SABBAH, Elias**
**F-06560 VALBONNE (FR)**

(56) Documents cités:
**US-A- 5 280 286** **US-A- 5 719 586**
**US-A- 6 147 662**

## Description

Domaine technique

La présente invention concerne les dispositifs d'émission et de réception sans contact destinés à assurer la traçabilité d'objets et concerne en particulier une étiquette sans contact à antenne omnidirectionnelle.

Etat de la technique

Les dispositifs d'émission et de réception sans contact sont largement utilisés de nos jours dans de nombreuses applications. Une de ces applications est la carte à puce sans contact qui est un système de plus en plus utilisé dans différents secteurs, comme par exemple le secteur des transports publics. Elles ont aussi été développées comme moyen de paiement.

L'échange d'informations entre un dispositif sans contact et le lecteur associé s'effectue par transmission de signaux électromagnétiques à distance entre une antenne logée dans le dispositif sans contact et une deuxième antenne située dans le lecteur. Pour élaborer, stocker et traiter les informations, le dispositif est muni d'un microcircuit connecté à l'antenne et comportant une zone mémoire. Lors de l'échange d'informations, l'alimentation du dispositif sans contact est assurée par les ondes électromagnétiques transmises par le Lecteur.

Une autre application des dispositifs sans contact qui prend de plus en plus d'importance est leur utilisation comme étiquettes apposées sur des objets pour leur identification dans le suivi de marchandises ou l'état de stocks. Dans ces applications, le microcircuit de l'étiquette apposée sur chaque objet contient en mémoire les données de l'objet qui permettent de répertorier et d'identifier l'objet et d'assurer ainsi sa traçabilité.

L'étiquette est apposée sur l'objet au moment de son élaboration et l'accompagne jusqu'à sa réception par le client. La mémoire du microcircuit contient les informations concernant les caractéristiques de l'objet ou son contenu s'il s'agit d'un conteneur. Ces informations peuvent à tout moment être lues par un lecteur. Actuellement, les fréquences couramment utilisées par le lecteur pour l'échange de données avec l'étiquette sont des ultra hautes fréquences (UHF) autour de 900 MHz qui permettent de lire l'étiquette à une distance dépassant 2 mètres.

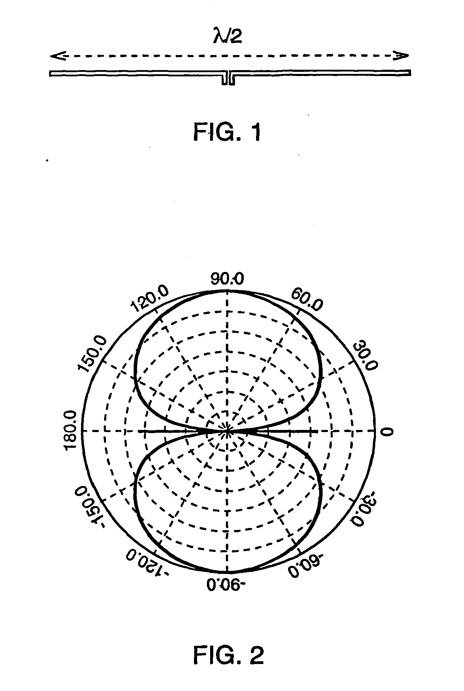

Une antenne simple pouvant être utilisé dans les étiquettes sans contact est l'antenne dipôle représentée sur la figure 1 dont la dimension est approximativement une demi-longueur d'onde pour la fréquence d'utilisation. La particularité d'un tel dipôle réside dans le fait que l'énergie est rayonnée principalement dans une direction préférentielle perpendiculaire à l'axe du dipôle comme illustré sur le diagramme de la figure 2. Par conséquent, un simple dipôle utilisé comme antenne présente l'inconvénient majeur d'avoir un rayonnement directif.

Le document US-5,719,586-A décrit un système RFID comprenant une configuration d'antenne à 2 dimensions obtenant un rayonnement omnidirectionnel.

Exposé de l'invention

C'est pourquoi le but de l'invention est de fournir une étiquette sans contact comportant une antenne du type dipôle demi-longueur d'onde à rayonnement omnidirectionnel.

L'objet de l'invention est donc une étiquette sans contact destinée à assurer la traçabilité d'un objet comprenant essentiellement un microcircuit et une antenne en Y connectée au microcircuit, la mémoire du microcircuit contenant les informations nécessaires à la traçabilité de l'objet, ces informations pouvant être lues à partir d'un lecteur par échange d'ondes électromagnétiques à ultra haute fréquence (UHF). L'antenne est une antenne du type dipôle constituée de trois brins principaux, un premier brin principal, un deuxième brin principal formant un premier dipôle avec le premier brin principal et un troisième brin principal formant un second dipôle avec le premier brin principal, les bras principaux étant disposés de telle sorte que l'angle entre les premier et deuxième brins principaux est égal à l'angle entre les premier et troisième brins principaux et l'angle entre le deuxième brin principal et le troisième brin principal est compris entre 60° et 180°, et chacun des brins principaux comporte à son extrémité un brin secondaire perpendiculaire au brin principal et dont la longueur est comprise entre 10 mm et 50 mm.

Description brèves des figures

Les buts, objets et caractéristiques de l'invention apparaîtront plus clairement à la lecture de la description qui suit faite en référence aux dessins dans lesquels :

la figure 1 représente une antenne demi-longueur d'onde constituée d'un dipôle,
la figure 2 représente le diagramme de rayonnement du dipôle illustré sur la figure 1,
la figure 3 est le schéma général de l'antenne en Y utilisée dans l'étiquette sans contact selon l'invention et la figure 3A est un grossissement de la connexion des brins de l'antenne au microcircuit,
la figure 4 représente un premier exemple de réalisation de l'antenne en Y,
la figure 5 représente le diagramme de rayonnement de l'antenne illustrée sur la figure 4,
la figure 6 représente un second exemple de réalisation de l'antenne en Y, et
la figure 7 représente le diagramme de rayonnement de l'antenne illustrée sur la figure 6.

## Description détaillée de l'invention

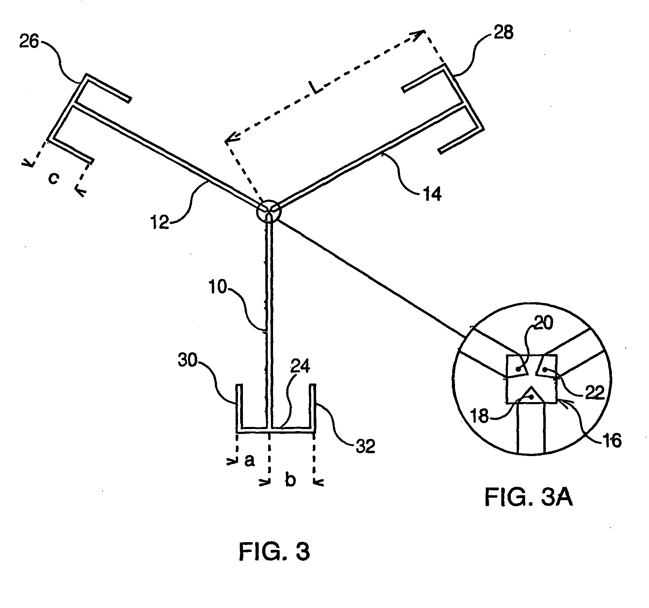

L'étiquette qui fait l'objet de l'invention comprend une antenne représentée sur la figure 3 composée essentiellement de trois brins principaux 10, 12 et 14 dont la longueur est proche du quart de longueur d'onde c'est-à-dire environ 80 mm pour une fréquence de 900 MHz. Le deuxième brin principal 12 et le troisième brin principal 14 ont une longueur identique L alors que le premier brin principal 10 peut avoir une longueur différente des vautres bras mais toutefois proche de L. Le premier brin principal 10 constitue un premier dipôle en combinaison avec le deuxième brin principal 12 et le premier brin principal 10 constitue également un second dipôle en combinaison avec le troisième brin principal 14.

L'angle entre le premier brin principal 10 et le deuxième brin principal 12 et l'angle entre le premier brin principal 10 et le troisième brin principal 14 sont égaux. En conséquence, pris séparément, chacun des deux dipôles possède par symétrie les mêmes propriétés électriques, à savoir le même diagramme de rayonnement et la même impédance d'entrée.

L'angle formé par le deuxième brin principal et le troisième brin principal peut varier de 60° au minimum à 180° correspondant à l'alignement entre les deux brins.

Le fonctionnement de l'antenne s'effectue suivant un mode différentiel entre les brins de chaque dipôle par l'intermédiaire du dispositif de charge qui est le microcircuit illustré en grossissement sur la figure 3A. Contrairement à une puce ordinaire n'ayant que deux points d'entrée connectés à l'antenne, le microcircuit 16 représenté sur la figure 3A est une charge comportant trois points d'entrée, un point 18 servant de référentiel ou GND connecté au premier brin principal et deux points chauds 20 et 22 identiques connectés respectivement aux deuxième et troisième brins principaux.

Pour un fonctionnement optimal de l'antenne illustrée sur la figure 3, l'impédance de l'antenne doit être adaptée à l'impédance du microcircuit sinon l'énergie reçue par l'antenne est minimale, voire quasi nulle. Si on désire avoir une adaptation correcte, soit une valeur d'impédance à plus ou moins 10% de la valeur nominale, il est très difficile d'obtenir cette valeur en modifiant uniquement les caractéristiques physiques des brins principaux. La solution retenue ici est d'ajouter des brins secondaires à l'extrémité des brins principaux et perpendiculaires à ces derniers. Ainsi, le premier brin secondaire 24 est situé à l'extrémité du premier brin principal 10 et est perpendiculaire à celui-ci, le deuxième brin secondaire 26 est situé à l'extrémité du deuxième brin principal 12 et est perpendiculaire à celui-ci, et le troisième brin secondaire 28 est situé à l'extrémité du troisième brin principal 14 et est perpendiculaire à celui-ci.

Le point de connexion entre un brin principal et le brin secondaire associé peut être variable et diviser ainsi le brin secondaire en deux segments de longueur a et b situés de part et d'autre de la connexion. Cette division est la même pour les trois brins secondaires 24, 26 et 28 lorsqu'on passe d'un brin à un autre par rotation. La longueur identique des trois brins secondaires est donc égale à a + b et est comprise entre 10 mm et 50 mm.

De manière à obtenir une meilleure adaptation de l'antenne en Y, une solution préférentielle consiste à prévoir un brin replié de chaque côté de chaque brin secondaire tels que les brins repliés 30 et 32 aux deux extrémités du brin secondaire 24. Les deux brins repliés associés à chaque brin secondaire ont une longueur identique c comprise entre 0 et 40 mm, longueur qui est également la même pour les trois brins secondaires.

A noter que la présence des brins repliés a l'avantage de réduire l'encombrement de l'antenne puisqu'ils permettent une réduction de longueur des brins principaux. La relation entre la longueur L des deuxième et troisième brins principaux (et approximativement du premier brin principal) et la longueur du brin replié peut s'exprimer ainsi :

$$60 \text{ mm} < L + c < 100 \text{ mm}$$

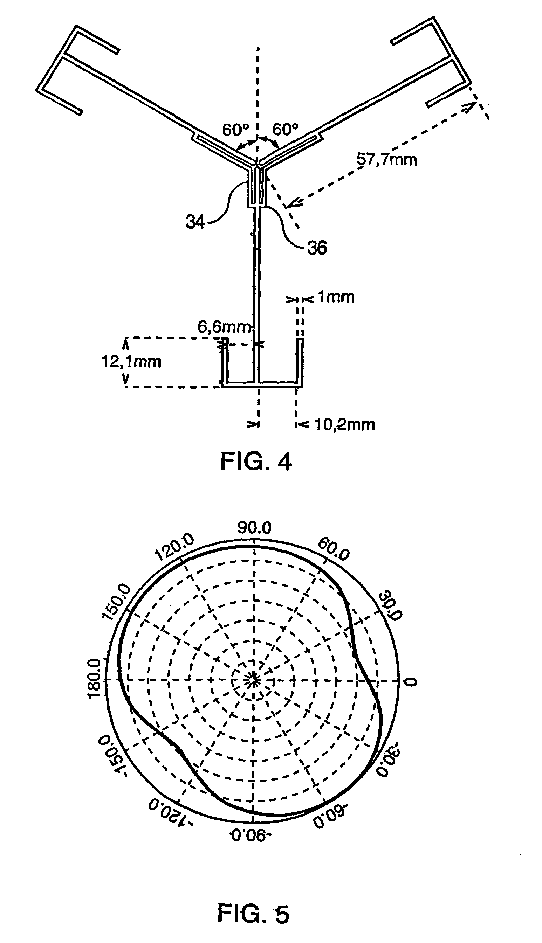

Deux exemples d'antenne en Y conforme à l'invention ont été réalisées. Le premier exemple illustré sur la figure 4 comporte des brins repliés relativement courts. Cette antenne comporte en outre un élément de court-circuit 34 entre le premier brin principal 10 et le deuxième brin principal 12, et un élément de court-circuit 36 entre le premier brin principal 10 et le troisième brin principal 14. Ces éléments supplémentaires permettent d'implémenter la fonction spécifique ESD (ElectroStatic Discharge) qui est d'évacuer tout courant généré par des impulsons électriques de l'ordre de plusieurs milliers de volts susceptibles d'endommager le microcircuit. En analysant le diagramme de rayonnement de l'antenne de la figure 4 illustré sur la figure 5, un homme du métier peut constater qu'il n'y a pas de direction sans rayonnement mais seulement une légère atténuation pour les directions angulaires comprises entre -30° et +60°.

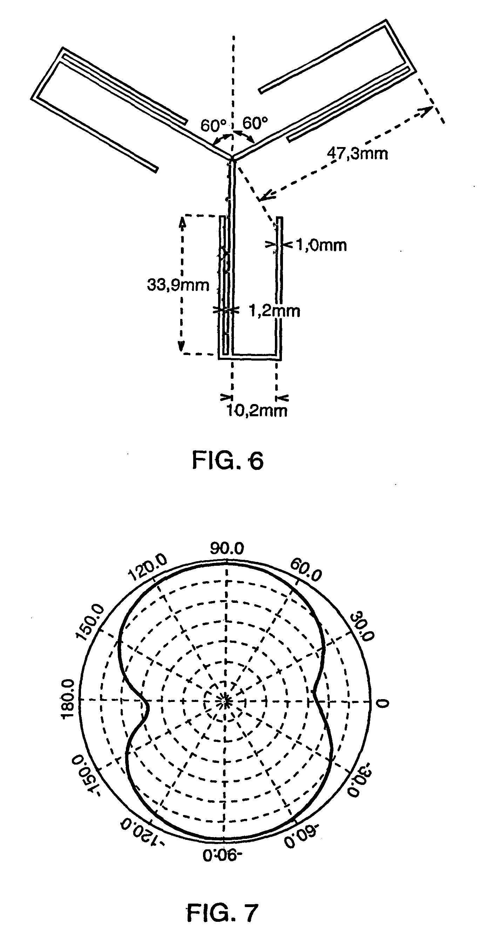

Le deuxième exemple de réalisation représenté sur la figure 6 ne comporte pas d'éléments de court-circuit comme dans l'exemple précédent. Les brins principaux sont très courts alors que les brins repliés sont relativement longs, ce qui permet de réaliser une étiquette sans contact de surface réduite puisqu'elle est contenue dans un rectangle de 85 mm X 95 mm. Le diagramme de rayonnement illustré sur la figure 7 ne présente pas de direction sans rayonnement mais une atténuation pour les directions comprises entre -60° et +60°.

L'antenne en Y qui vient d'être décrite en référence aux figures 4 et 6 a de préférence une largeur de 1 mm et peut être fixée par tout procédé mais de préférence par impression sérigraphique d'une encre contenant des particules d'argent.

Comme il a été mentionné ci-dessus, l'étiquette qui fait l'objet de cette invention trouve application lorsqu'il est nécessaire d'assurer la traçabilité d'un objet, d'une marchandise ou d'un conteneur. L'étiquette fonctionne dans le domaine UHF c'est-à-dire pour des fréquences pouvant varier généralement entre 860 MHz et 960 MHz, et en particulier de 902 MHz à 928 MHz.

## Revendications

1. Etiquette sans contact destinée à assurer la traçabilité d'un objet, comprenant essentiellement un microcircuit (16) et une antenne en Y connectée audit microcircuit, la mémoire dudit microcircuit contenant les informations nécessaires à la traçabilité dudit objet, lesdites informations pouvant être lues à partir d'un lecteur par échange d'ondes électromagnétiques à ultra haute fréquence (UHF);
ladite étiquette étant **caractérisée en ce que** ladite antenne est une antenne du type dipôle constituée de trois brins principaux, un premier brin principal (10), un deuxième brin principal (12) formant un premier dipôle avec ledit premier brin principal et un troisième brin principal (14) formant un second dipôle avec ledit premier brin principal, lesdits bras principaux étant disposés de telle sorte que l'angle entre lesdits premier et deuxième brins principaux est égal à l'angle entre lesdits premier et troisième brins principaux et l'angle entre ledit deuxième brin principal et ledit troisième brin principal est compris entre 60° et 180°, et chacun desdits brins principaux comporte à son extrémité un brin secondaire (24, 26 ou 28) perpendiculaire au brin principal et dont la longueur est comprise entre 10 mm et 50 mm.

2. Etiquette sans contact selon la revendication 1, dans laquelle ledit deuxième bras principal (12) et ledit troisième bras principal (14) ont une même longueur L.

3. Etiquette sans contact selon la revendication 2, dans laquelle chacun desdits bras secondaires (24, 26, 28) est divisé par le point de connexion avec le brans principal associé en deux segments de longueur a et b situés de part et d'autre dudit point de connexion.

4. Etiquette sans contact selon la revendication 3, dans laquelle lesdits segments ont respectivement une longueur a et b, la longueur a + b dudit brin secondaire étant comprise entre 10 mm et 50 mm.

5. Etiquette sans contact selon la revendication 1, 2 ou 3, comportant en outre un brin replié (30, 32) de chaque côté de chaque brin secondaire (24, 26, 28) de longueur identique c comprise entre 0 et 40 mm.

6. Etiquette sans contact selon la revendication 5, dans laquelle ladite longueur c est identique pour les trois brins principaux (10, 12, 14).

7. Etiquette sans contact selon la revendication 6, dans laquelle ladite longueur c est telle que la somme L + c est comprise entre 60 mm et 100 mm.

8. Etiquette sans contact selon l'une des revendications 1 à 7, dans laquelle il existe un élément de court-circuit (34) entre ledit premier brin principal (10) et ledit deuxième brin principal (12), et un élément de court-circuit (36) entre ledit premier brin principal et ledit troisième brin principal (14), lesdits éléments de court-circuit permettant d'implémenter la fonction spécifique ESD (ElectroStatic Discharge) pour évacuer tout courant généré par des impulsions électriques de l'ordre de plusieurs milliers de volts susceptibles d'endommager ledit microcircuit (16).

9. Etiquette sans contact selon l'une des revendications précédentes, dans laquelle ledit microcircuit (16) comporte trois points d'entrée, un point (18) servant de référentiel ou GND connecté audit premier brin principal (10) et deux points chauds (20) et (22) identiques connectés respectivement audits deuxième (12) et troisième (14) brins principaux.

## Claims

1. A contactless label designed to ensure the traceability of an object featuring essentially a microcircuit (16) and a Y-shaped antenna connected to said microcircuit, the memory of said microcircuit containing information necessary for tracing said object, said information being read with a reader through the exchange of ultra high frequency (UHF) electromagnetic waves;
said contactless label being **characterized in that** said antenna is a dipole type antenna made up of three main wires, a first main wire (10), a second main wire (12) forming a first dipole with said first main wire and a third main wire (14) forming a second dipole with said first main wire, said main arms being placed in such a way that the angle between said first and second main wires is equal to the angle between said first and third main wires and the angle between said second main wire and said third main wire being between 60° and 180°, and each of said main wires including at its end a secondary wire (24, 26, or 28) perpendicular to the main wire and whose length is between 10 mm and 50 mm.

2. The contactless label according to claim 1, in which said second main arm (12) and said third main arm (14) have the same length L.

3. The contactless label according to claim 2, in which each of said secondary arms (24, 26, 28) is divided by the connection point with the associated main arm into two segments of length a and b located on either side of said connection point.

4. The contactless label according to claim 3, in which said segments have a length a and b respectively, the length a + b of said secondary wire being between 10 mm and 50 mm.

5. The contactless label according to claim 1, 2, or 3, additionally featuring a folded wire (30, 32) on each side of each secondary wire (24, 26, 28) of an identical length c between 0 and 40 mm.

6. The contactless label according to claim 5, in which said length c is identical for the three main wires (10, 12, 14).

7. The contactless label according to claim 6, in which said length c is such that the sum L + c is between 60 mm and 100 mm.

8. The contactless label according to one of the claims 1 through 7, in which there exists a short-circuit element (34) between said first main wire (10) and said second main wire (12), and a short-circuit element (36) between said first main wire and said third main wire (14), said short-circuit elements allowing the implementation of the specific ESD (ElectroStatic Discharge) function to discharge any current generated by electrical pulses of the order of several thousand volts likely to damage said microcircuit (16).

9. The contactless label according to one of the claims 1 through 8, in which said microcircuit (16) includes three input points, one point (18) used as the reference or GND connected to said first main wire (10) and two identical hot spots (20) and (22) connected to said second (12) and third (14) main wires respectively.

**Patentansprüche**

1. Kontaktloses Etikett, das dazu bestimmt ist, die Verfolgbarkeit eines Objekts zu gewährleisten, wobei das Etikett im Wesentlichen eine Mikroschaltung (16) und eine mit der Mikroschaltung verbundene Y-Antenne enthält, wobei der Speicher der Mikroschaltung die für die Verfolgbarkeit des Objekts notwendigen Informationen enthält, wobei die Informationen anhand eines Lesegeräts durch Austauschen elektromagnetischer Wellen mit Ultrahochfrequenz (UHF) gelesen werden können;
wobei das Etikett **dadurch gekennzeichnet ist, dass** die Antenne eine Dipolantenne ist, die aus drei Hauptzweigen gebildet ist, einem ersten Hauptzweig (10), einem zweiten Hauptzweig (12), der einen ersten Dipol mit dem ersten Hauptzweig bildet, und einem dritten Hauptzweig (14), der einen zweiten Dipol mit dem ersten Hauptzweig bildet, wobei die Hauptzweige in der Weise angeordnet sind, dass der Winkel zwischen dem ersten und dem zweiten Hauptzweig gleich dem Winkel zwischen dem ersten und dem dritten Hauptzweig ist und der Winkel zwischen dem zweiten Hauptzweig und dem dritten Hauptzweig im Bereich von 60° bis 180° liegt, wobei jeder der Hauptzweige an seinem Ende einen Sekundärzweig (24, 26 oder 28) aufweist, der zu dem Hauptzweig senkrecht ist und dessen Länge im Bereich von 10 mm bis 50 mm liegt.

2. Kontaktloses Etikett nach Anspruch 1, wobei der zweite Hauptzweig (12) und der dritte Hauptzweig (14) dieselbe Länge L haben.

3. Kontaktloses Etikett nach Anspruch 2, wobei jeder der Sekundärzweige (24, 26, 28) durch den Verbindungspunkt mit dem zugeordneten Hauptzweig in zwei Segmente mit Länge a bzw. b unterteilt ist, die sich beiderseits des Verbindungspunkts befinden.

4. Kontaktloses Etikett nach Anspruch 3, wobei die Segmente eine Länge a bzw. b haben, wobei die Länge a + b des Sekundärzweigs im Bereich von 10 mm bis 50 mm liegt.

5. Kontaktloses Etikett nach Anspruch 1, 2 oder 3, das außerdem auf jeder Seite jedes Sekundärzweigs (24, 26, 28) einen umgebogenen Zweig (30, 32) mit gleicher Länge c, die im Bereich von 0 bis 40 mm liegt, aufweist.

6. Kontaktloses Etikett nach Anspruch 5, wobei die Länge c für die drei Hauptzweige (10, 12, 14) gleich ist.

7. Kontaktloses Etikett nach Anspruch 6, wobei die Länge c derart ist, dass die Summe L + c im Bereich von 60 mm bis 100 mm liegt.

8. Kontaktloses Etikett nach einem der Ansprüche 1 bis 7, wobei zwischen dem ersten Hauptzweig (10) und dem zweiten Hauptzweig (12) ein Kurzschlusselement (34) vorhanden ist und zwischen dem ersten Hauptzweig und dem dritten Hauptzweig (14) ein Kurzschlusselement (36) vorhanden ist, wobei die Kurzschlusselemente ermöglichen, die spezifische Funktion ESD (ElectroStatic Discharge) zu implementieren, um jeglichen Strom, der durch elektrische Impulse in der Größenordnung von mehreren 1000 Volt, die die Mikroschaltung (16) beschädigen können, erzeugt wird, abzuführen.

9. Kontaktloses Etikett nach einem der vorhergehenden Ansprüche, wobei die Mikroschaltung (16) drei Eingangspunkte aufweist, einen Punkt (18), der als Referenz oder Masse dient und mit dem ersten

**EP 1 810 365 B1**

Hauptzweig (10) verbunden ist, und zwei Lastpunkte (20) und (22), die gleich sind und mit dem zweiten Hauptzweig (12) bzw. dem dritten Hauptzweig (14) verbunden sind.

$\lambda/2$

## FIG. 1

## FIG. 2

7

FIG. 3

FIG. 3A

FIG. 4

FIG. 5

60° 60°

47,3mm

1,0mm

33,9mm

1,2mm

10,2mm

FIG. 6

90.0

120.0      60.0

150.0      30.0

180.0      0

-150.0      -30.0

-120.0      -60.0

-90.0

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5719586 A